# EUROPÄISCHE PATENTSCHRIFT

(11) **EP 0 434 785 B1**
(45) Veröffentlichungstag und Bekanntmachung des Hinweises auf die Patenterteilung: **28.04.1993**
(21) Anmeldenummer: 90908226.5
(22) Anmeldetag: 28.05.1990
(51) Int. Cl.: E04D 3/36, E04F 13/08

(54) **BEFESTIGUNGSELEMENT ZUR FIXIERUNG VON ISOLIERBAHNEN UND/ODER -PLATTEN AUF EINEM FESTEN UNTERBAU**
FASTENING ELEMENT FOR FIXING INSULATING STRIPS AND/OR PANELS ON A SOLID SUBSTRUCTURE
ELEMENT DE FIXATION SERVANT A FIXER DES BANDES ET/OU PLAQUES ISOLANTES SUR UNE BASE FIXE

(30) Priorität: 14.07.1989 AT 1720/89
(43) Veröffentlichungstag der Anmeldung: 03.07.1991
(73) Patentinhaber: SFS Stadler Holding AG, CH-9435 Heerbrugg (CH)
(72) Erfinder: KLUSER, Remo, CH-9450 Altstätten (CH)
(86) Internationale Anmeldenummer: EP9000853
(87) Internationale Veröffentlichungsnummer: WO9101420

(56) Entgegenhaltungen:
- WO-A-88/05487
- FR-A- 2 098 531
- FR-A- 2 328 811
- FR-A- 2 344 735
- GB-A- 1 396 412
- GB-A- 2 049 859
- US-A- 2 665 931

## Beschreibung

Die Erfindung betrifft ein Befestigungselement zur Fixierung von Isolierbahnen und/oder -platten auf einem festen Unterbau, mit einer großflächigen Unterlegscheibe und einem rohrförmigen Fortsatz zum Durchtritt, zur Führung eines und zur Halterung an einem in den festen Unterbau eingreifenden Befestigers, wobei die durch den rohrförmigen Fortsatz und den diesen überragenden Abschnitt des Befestigers gebildete Länge durch eine kraft- und/oder formschlüssige, verstellbare Verbindung veränderbar ist.

Solche Befestigungselemente werden zum Befestigen von Isoliermaterialien auf festem Untergrund eingesetzt, so z.B. bei der Befestigung von Isolierplatten auf Dächern. Wenn Materialien auf einem Dach transportiert werden müssen, kann es vorkommen, daß beispielsweise ein Arbeiter auf eine Unterlegscheibe oder in deren näheren Umgebung auftritt, oder daß ein Fahrzeug oder Werkzeuge über die Unterlegscheibe hinwegfahren. Derart örtlich begrenzte Kräfte können dazu führen, daß das freie Ende des Befestigers durch die aufgebrachte Abdichtung hindurchstößt, oder daß die Unterlegscheibe die auf dem Isoliermaterial aufgebrachte Dachbahn durchstößt. Es wurde auch schon eine Ausführung vorgeschlagen, bei der an der relativ großflächigen Unterlegscheibe ein rohrförmiger Fortsatz angeordnet ist, in welchem eine Schraube eingesetzt ist. Der Kopf dieser Schraube liegt dabei innerhalb dieses rohrförmigen Fortsatzes und ist gegenüber der Oberseite der Unterlegscheibe relativ weit versenkt angeordnet, so daß sich die erforderliche Schraubenlänge wesentlich verkürzt. Die Dicke der zu befestigenden Isoliermaterialien kann daher durch das Zusammenwirken der Länge des rohrförmigen Fortsatzes und der Länge der Schraube überbrückt werden. In diesem Zusammenhang ist es auch schon bekannt geworden, die Unterlegscheibe und den rohrförmigen Fortsatz aus zwei getrennten Teilen zu fertigen. Bei beiden bekannten Ausgestaltungen besteht die Möglichkeit, daß sich das Befestigungselement bei entsprechender Belastung teleskopartig ineinanderschieben kann, also z.B. dann, wenn eine Person auf die Unterlegscheibe auftritt.

Nachteilig bei den bekannten Ausführungen ist es aber, daß je nach Dicke der Isolierbahnen und/oder -platten und insbesondere bei unterschiedlicher Dicke der Isolierbahnen auf einem Dach eine Vielzahl verschiedener Längen von Befestigern, also in der Regel Schrauben, benötigt wird, da bei der bisherigen Ausführung der Schraubenkopf am Grund des Innenraumes des rohrförmigen Fortsatzes zur Anlage kommen muß, da der rohrförmige Fortsatz und die Unterlegscheibe gegen die Oberseite der Isolierbahn angepreßt werden müssen. Wenn es gleichgültig ist, wie weit eine solche Schraube in den festen Unterbau eingeschraubt wird, spielt dies weniger eine Rolle. Wenn der feste Unterbau beispielsweise aus Betonplatten oder aus Holz mit einer Sichtverschalung besteht, dann können diese Schrauben nicht beliebig weit in diesen Unterbau eingedreht werden.

Bei einer weiteren bekannten Ausführung (GB-A-2 049 859) ist ein aus Kunststoff gefertigtes Befestigungselement vorgesehen, welches aus in axialer Richtung gesehen zwei Teilen besteht. Der eine Teil kann in den rohrförmigen Fortsatz des anderen Teiles eingeschoben werden, wobei dieser im Durchmesser kleinere Teil eine sägezahnartige Verrippung aufweist und im Inneren des rohrförmigen Fortsatzes eine dazu korrespondierende Verzahnung vorgesehen ist. Dadurch kann das gleiche Befestigungselement für verschieden dicke Isolationsplatten eingesetzt werden, wobei jedoch die einmal eingestellte Verbindung als fix zu betrachten ist. Es ist lediglich möglich, die beiden Teile durch weiteres kräftiges Andrücken weiter ineinander zu verschieben, wobei in der jeweiligen Endlage eine Verriegelung ohne Rückkehrmöglichkeit in die Ausgangslage erfolgt.

Bei einer weiteren bekannten Ausgestaltung (FR-A-2 098 531) ist ein Befestigungselement vorgesehen, mit welchem profilierte Dachplatten an einer Trägerkonstruktion befestigt werden sollen. Es geht hier um die früher bei Wellplattenbefestigungen übliche Hakenbefestigung von unten her, wobei also das freie Ende eines solchen Hakens durch die Abdeckplatte hindurchgestoßen wird und die Gegenbefestigung von außen her erfolgt. Bei dieser Gestaltung ist eine sägezahnartige Ausbildung des freien Endes vorgesehen, wobei auf dieses Ende ein Verriegelungselement mit Rasteinsätzen aufgeschoben wird. Dieses Verriegelungselement wird soweit aufgeschoben, bis der Haken fest an der Unterkonstruktion anliegt und die profilierte Platte an die Unterkonstruktion andrückt. Eine nachträgliche weitere Verstellmöglichkeit ist nach beiden Richtungen hin nicht mehr möglich.

Die Erfindung hat sich daher zur Aufgabe gestellt, ein Befestigungselement zu schaffen, mit welchem in einem relativ großen Bereich ein Ausgleich bezüglich der Dicke von Isolierbahnen möglich und auch eine spätere Nachstellmöglichkeit gegeben ist, wobei trotzdem eine teleskopartige Bewegung zwischen Befestiger und rohrförmigem Fortsatz stattfinden kann.

Erfindungsgemäß wird dies dadurch erreicht, daß die kraft- und/oder formschlüssig lösbare Verbindung zwischen dem Befestiger und einem auf sein in den Fortsatz hineinragendes Ende aufgesetzten Verriegelungselement oder zwischen dem Befestiger und dem rohrförmigen Fortsatz oder zwischen Abschnitten eines mehrteiligen Fortsatzes einstellbar ausgebildet ist, daß der in den rohrförmigen Fortsatz hineinragende Endbereich des Befestigers und/oder das Verriegelungselement mit Rippen, Rillen, Riffelungen, Erhebungen, Vertiefungen, federnd nachgiebigen Laschen bzw. Nasen oder dergleichen zum gegenseitigen kraft- und/oder formschlüssigen Angriff versehen sind, und daß der Befestiger und der rohrförmige Fortsatz teleskopartig ineinanderschiebbar sind.

Durch diese erfindungsgemäßen Maßnahmen wird erreicht, daß in einem relativ großen Bereich ein einzusetzendes Befestigungselement auf die Dicke der zu befestigenden Isolierbahnen und/oder -platten abgestimmt werden kann, daß auch nachträglich bei einem eventuellen Setzen der Isolierbahnen eine Nachverstellung möglich ist, und daß die geforderte teleskopartige Bewegung zwischen dem Befestiger und dem rohrförmigen Fortsatz trotzdem erfolgen kann. Es ist also je nach konstruktivem Aufbau des Befestigungselementes möglich, den Befestiger mehr oder weniger weit in den rohrförmigen Fortsatz hineinragen zu lassen, den rohrförmigen Fortsatz zu verkürzen oder zu verlängern, wobei immer die Gewähr gegeben ist, daß die Unterlegscheibe im erforderlichen Maß an die Oberfläche der Isolierbahnen angepreßt wird. Trotzdem ist aber bei punktweiser Belastung ein teleskopartiges Niedertreten des Befestigungselementes in einem relativ großen Bereich möglich.

Eine solche Konstruktion ist einsetzbar, ob der Befestiger nun als Schraube ausgebildet ist, welche in den festen Untergrund eingedreht wird, oder aber als in eine Bohrung einschlagbarer Teil, der immer in der gleichen Tiefe in den festen Unterbau eingesetzt wird. Ob nun die Isolierbahnen über das ganze Dach gleich dick sind, oder ob sie beispielsweise zu einem Randbereich hin keilförmig dünner werden, spielt dabei keine Rolle mehr; es können praktisch immer die gleich langen Befestiger eingesetzt werden, obwohl sie nicht weiter in den Unterbau eingedreht oder eingeschlagen werden müssen.

Weitere erfindungsgemässe Merkmale und besondere Vorteile werden in der nachstehenden Beschreibung anhand der Zeichnungen noch näher erläutert. Es zeigen:
- Fig. 1: einen Schnitt durch einen festen Unterbau mit aufgelegter Isolierbahn und einem erfindungsgemässen Befestigungselement;
- Fig. 2: einen Schnitt durch den rohrförmigen Fortsatz mit eingesetztem Befestiger, gegenüber Fig. 1 vergrössert dargestellt;
- Fig. 3: eine Ausführungsform eines Befestigers, gegenüber Fig. 2 vergrössert dargestellt;
- Fig. 4 und 5: in Seitenansicht und Draufsicht eine besondere Ausführungsform eines auf den Befestiger aufsetzbaren Verriegelungselementes;
- Fig. 6 bis 29: verschiedene Konstruktionsvarianten des Befestigungselementes sowie Details dieser Befestigungselemente, bei welchen eine kraft- und/oder formschlüssige, verstellbare Verbindung zwischen dem Befestiger und einem aufgesetzten Verriegelungselement oder zwischen dem Befestiger und dem rohrförmigen Fortsatz oder zwischen Abschnitten eines mehrteiligen Fortsatzes vorgesehen ist.

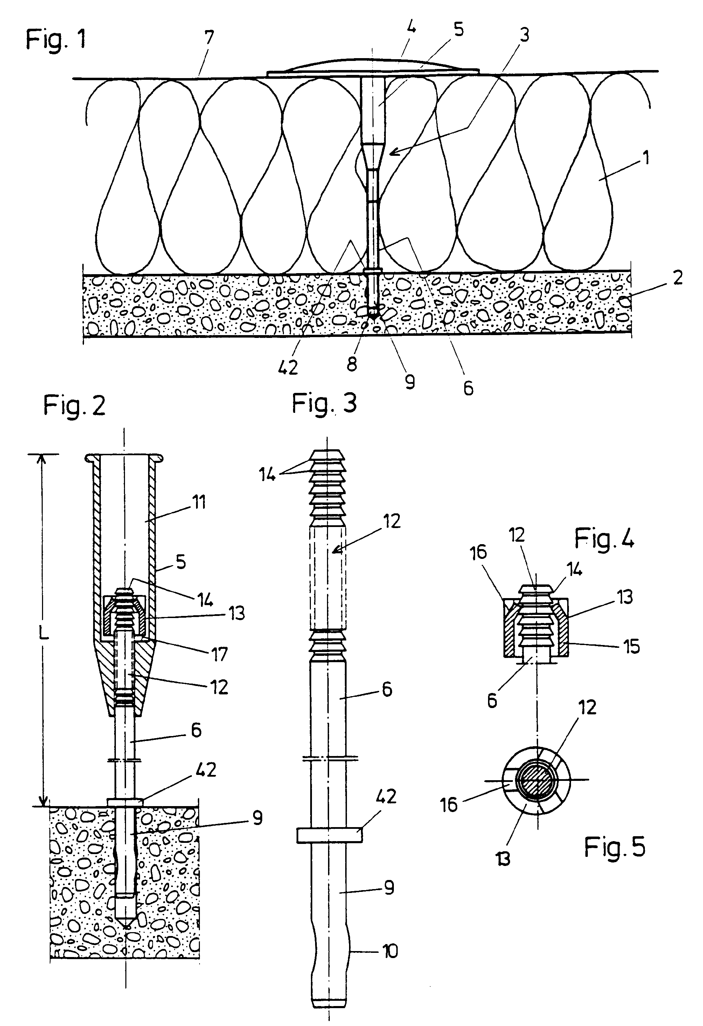

In Fig. 1 ist ein Ausführungsbeispiel dargestellt, wie Isolierbahnen 1 auf einem festen Unterbau 2 befestigt werden. Es wird dazu ein Befestigungselement 3 verwendet, welches eine grossflächige Unterlegscheibe 4 mit einem rohrförmigen Fortsatz 5 aufweist. Mittels eines Befestigers 6, welcher in den festen Unterbau 2 eingesetzt ist, wird über den rohrförmigen Fortsatz 5 die grossflächige Unterlegscheibe 4 an die Oberfläche 7 der Isolierbahn 1 angedrückt. Die Unterlegscheibe 4 und der rohrförmige Fortsatz 5 sind zweckmässig aus getrennten Teilen gefertigt und können daher auch aus verschiedenen Materialien gebildet sein. Allein schon aus Gründen der Vormagazinierung ist es zweckmässig, lediglich den Befestiger 6 und den rohrförmigen Fortsatz 5 gemeinsam zu magazinieren und die Unterlegscheibe 4 getrennt zu stapeln. Da der freie Endbereich des Befestigers in den rohrförmigen Fortsatz 5 hineinragt, ist eine teleskopartige Verschiebung zwischen dem rohrförmigen Fortsatz 5 und dem entsprechenden Endbereich des Befestigers 6 möglich, so dass Trittbelastungen auf die Unterlegscheibe 4 ohne Probleme abgefangen werden können.

Der Unterbau 2 in der Darstellung nach Fig. 1 besteht aus einer Betonplatte. In dieser Betonplatte werden Bohrungen 8 angebracht, in welche dann die Befestiger 6 mit ihren Enden 9 eingeschlagen werden. Bei dieser speziellen Ausführung des Befestigers 6 hat das Ende 8 eine im wesentlichen glatte Oberfläche, weist jedoch wenigstens eine Ausbuchtung 10 auf, wobei diese Ausbuchtung 10 eine ausreichende form- und kraftschlüssige Halterung im aus Beton gefertigten Unterbau 2 bietet. Durch einen Anschlagbund 11 ist gewährleistet, dass das Ende 9 stets in der gleichen Tiefe in die Bohrung 8 eingeschlagen wird, was gerade bei einem relativ dünnwandigen Betonunterbau von besonderer Bedeutung ist. Durch eine solche Ausgestaltung kann der Befestiger 6 also direkt in einen aus Beton gebildeten Unterbau 2 eingeschlagen werden.

Die erfindungsgemässen Massnahmen lassen sich aber auch bei einem Befestiger verwirklichen, der an seinem Ende 9 mit einem Gewinde versehen ist, um den Befestiger beispielsweise in einen Metall- oder in einen Holzunterbau einzuschrauben.

Das eine Ende 12 des Befestigers 6 greift in den Innenraum 11 des rohrförmigen Fortsatzes 5 ein, wobei in diesem Innenraum 11 auf das Ende 12 des Befestigers 6 ein Verriegelungselement 13 aufgesetzt ist. Der Befestiger 6 ist an seinem freien Endbereich 12 bei der Ausführung nach den Fig. 2 bis 5 mit sägezahnartigen Rippen 14 versehen. Je nach dem Zusammenwirken mit dem Verriegelungselement können anstelle dieser sägezahnartigen Rippen 14 auch Rillen, Riffelungen, Erhebungen oder sonstige Vertiefungen vorgesehen werden.

Das Verriegelungselement 13 ist bei dieser Ausführung als rohrförmige Hülse 15 ausgebildet, welche mit einer oder mehreren, beim gezeigten Ausführungsbeispiel mit drei zur Durchgangsöffnung hin abstehenden bzw. abgebogenen Rastnasen oder -laschen 16 ausgeführt ist.

Das Verriegelungselement 13 kann somit durch die obere freie Oeffnung des rohrförmigen Fortsatzes 5 in den Innenraum 11 desselben eingeführt und in axialer Richtung auf das in den rohrförmigen Fortsatz 5 hineinragende Ende 12 des Befestigers 6 aufgeschoben werden. Das Verriegelungselement 13 wird dabei so weit auf den Befestiger 6 aufgeschoben, bis die Unterseite des Verriegelungselementes 13 am Boden 17 des Innenraumes 11 des rohrförmigen Fortsatzes 5 zur Anlage kommt. Dadurch wird die Unterlegscheibe 4 an der Oberfläche 7 der Isolierbahn 1 angepresst. Wenn nun eine besondere Belastung auf die Unterlegscheibe 4 ausgeübt wird, kann sich der rohrförmige Fortsatz 5 teleskopartig auf dem Befestiger 6 nach unten bewegen, wobei der rohrförmige Fortsatz 5 zusammen mit der Unterlegscheibe 4 nach Belastungsende wieder in die Ursprungslage zurückgeführt wird. Sollte sich die Isolierbahn 1 im Laufe der Zeit setzen, besteht immer die Möglichkeit, das Verriegelungselement 13 nachträglich weiter in axialer Richtung auf das freie Ende 12 des Befestigers 6 aufzuschieben, so dass die aus Befestiger 6 und rohrförmigem Fortsatz 5 gebildete Länge L jederzeit verkürzbar ist. Trotzdem ist dann immer wieder die Gewähr gegeben, dass das Verriegelungselement 13 in einer Stellung auf dem Befestiger 6 ist, in welcher das Anpressen der Unterlegscheibe 4 bewirkt wird, und dass nach wie vor ein teleskopartiges Ineinanderschieben von Befestiger 6 und rohrförmigem Fortsatz 5 ermöglicht bleibt.

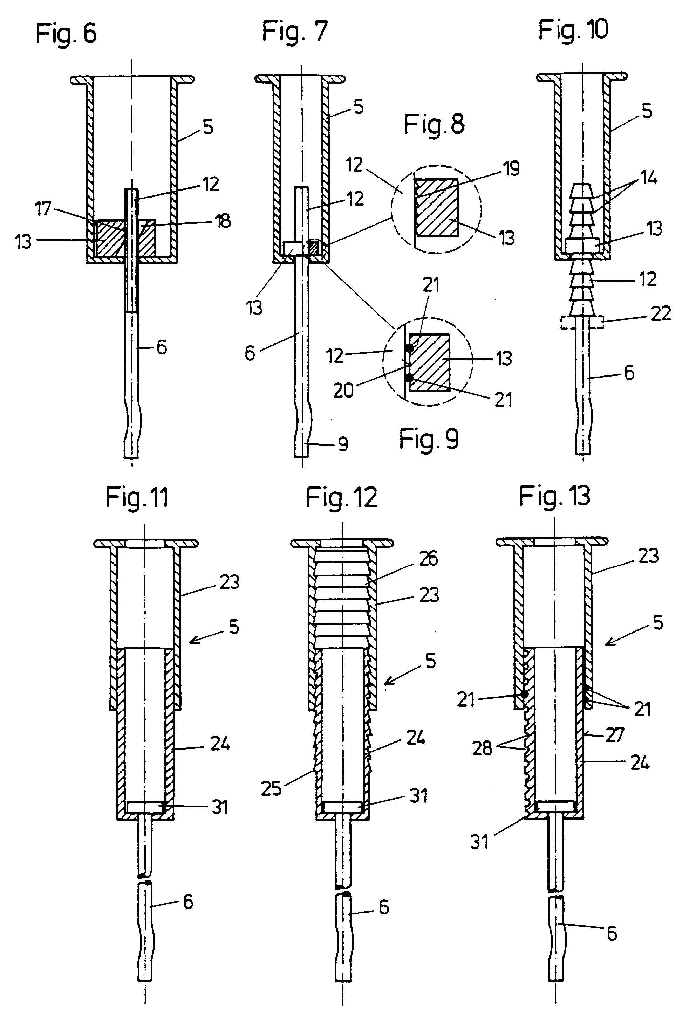

Bei der Ausführung nach Fig. 6 weist das Verriegelungselement 13 eine Durchgangsöffnung 17 mit einer auf das freie Ende 12 des Befestigers 6 abgestimmten Innenverzahnung bzw. einem Innengewinde auf, wobei eine weitere Durchgangsöffnung 18 mit glatter Oberfläche und einem Durchmesser gleich oder grösser als der Aussendurchmesser des Befestigers 6 die erste Durchgangsöffnung 17 spitzwinklig kreuzt. Bei dieser Ausgestaltung ist durch Kippen des Verriegelungselementes 13 ein Nachstellen desselben in Achsrichtung des Befestigers 6 möglich, wobei nach dem Loslassen des Verriegelungselementes 13 dieses wieder in die Querstellung, bezogen auf die Längsachse des Befestigers 6, zurückgeht und somit wieder die Verriegelung bewirkt.

Bei der Ausführung nach den Fig. 7 bis 9 sind zwei Varianten ersichtlich. Bei der einen Variante nach Fig. 8 ist das Verriegelungselement 13 mit einer gehärteten Innenverzahnung 19 bzw. -riffelung versehen und wird mit entsprechender Passung auf den glatten Endbereich 12 des Befestigers 6 aufgesetzt. Durch die sägezahnartige Ausbildung der Innenverzahnung 19 ist ein Vorschieben des Verriegelungselementes 13 nur in Richtung zum Ende 9 des Befestigers hin möglich, so dass stets eine ordnungsgemässe Anpressung der Unterlegscheibe gewährleistet ist. Es ist aber auch bei einer solchen Ausführung stets ein Nachverstellen der Verspannung möglich, und trotzdem ist die Gewähr des teleskopartigen Verkürzens des Befestigungselementes gegeben.

Bei der zweiten Ausführung nach Fig. 7, die im Detail in Fig. 9 aufgezeigt ist, weist das Verriegelungselement 13 in der Wandung 20 seiner Durchgangsbohrung zwei oder mehrere umlaufende Nuten auf, in welche Sprengringe 21 eingesetzt sind. Auch hier weist der Befestiger 6 einen Endbereich 12 mit glatter Oberfläche auf, wobei eine ordnungsgemässe kraftschlüssige Halterung des Verriegelungselementes 13 auf dem Endbereich 12 des Befestigers 6 gewährleistet ist. Es ist aber auch eine entsprechende Einstell- und Nachstellmöglichkeit für das Verriegelungselement 13 gegeben.

Bei der Ausführung nach Fig. 10 ist ein ähnlicher Befestiger 6 eingesetzt, wie er auch in Fig. 3 dargestellt ist. Es sind jedoch hier die sägezahnartigen Rippen 14 etwas anders ausgebildet. Bei dieser Ausführung ist das Verriegelungselement 13 als ringförmiger Teil ausgeführt, welcher entweder elastisch aufweitbar oder aber mit einem Längsschlitz versehen wird. Es ist dadurch möglich, das Verriegelungselement 13 bei bedarf jeweils über die nächste sägezahnartige Rippe 14 zu verschieben, um das Verriegelungselement 13 in die zweckmässige Verriegelungsstellung zu bringen. bei dieser Ausgestaltung ist ferner eine weitere Konstruktionsvariante strichliert eingezeichnet. Es könnte am Befestiger 6 anschliessend an den mit den sägezahnartigen Rippen 14 versehenen Endbereich 12 ein Anschlagbund 22 vorgesehen werden, welcher die teleskopartige Bewegung zwischen dem rohrförmigen Fortsatz 5 und dem Befestiger 6 begrenzt.

Bei der Ausgestaltung nach Fig. 11 ist der rohrförmige Fortsatz 5 aus zwei koaxial einander übergreifenden Hülsenteilen 23 und 24 gebildet, welche form-und/oder kraftschlüssig, jedoch in Axialrichtung verstellbar miteinander verbunden sind. bei der Ausgestaltung nach Fig. 11 greifen die beiden Hülsenteile 23 und 24 mit einer entsprechenden Passung ineinander ein, so dass die an sich glatten Oberflächen kraftschlüssig aneinander gepresst sind. Durch diese Ausgestaltung ist es möglich, die Gesamtlänge des über den festen Unterbau 2 hinausragenden Bereiches des Befestigungselementes zu verlängern oder zu verkürzen, und zwar durch mehr oder weniger weites Ineinanderschieben der beiden Hülsenteile 23 und 24 des Fortsatzes 5.

Fig. 12 zeigt eine der Fig. 11 ähnliche Ausführungsform, wobei jedoch die beiden Hülsenteile 23 und 24 an den einander zugewandten Oberflächen mit sägezahnartigen Rippen 25 bzw. entsprechenden Nuten 26 versehen sind. Es ist dadurch eine rasterartige Verstellmöglichkeit gegeben.

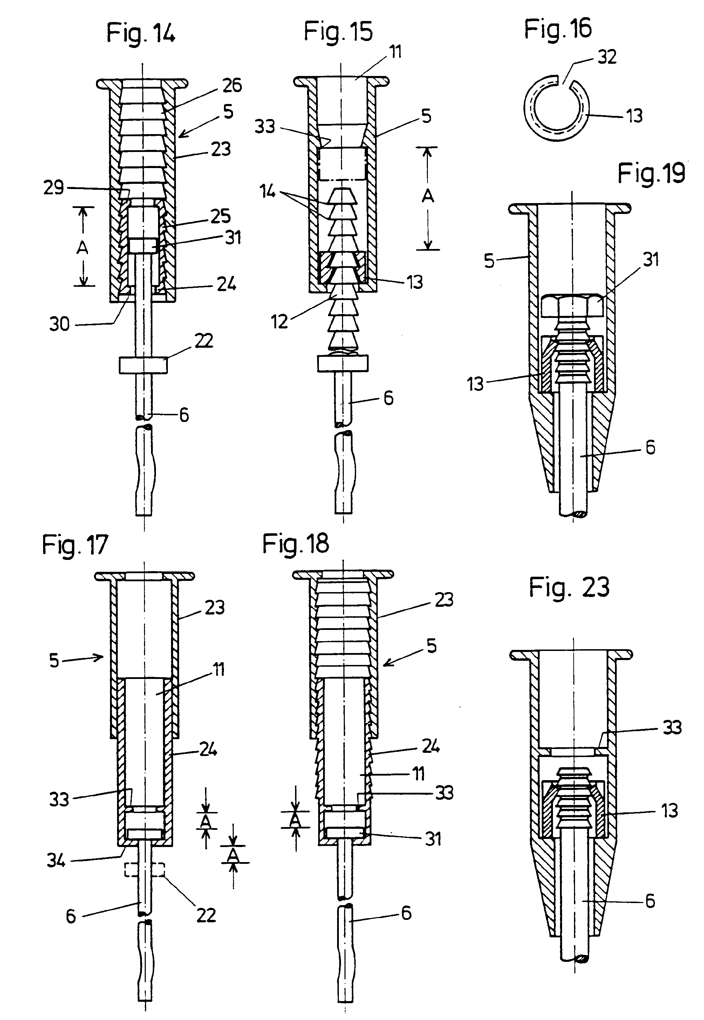

Nach Fig. 13 erfolgt zwischen den beiden Hülsenteilen 23 und 24 des Fortsatzes 5 eine Verriegelung form- und/oder kraftschlüssig. Es sind hier zwei Ausführungsvarianten in dieser Fig. 13 dargestellt. In der rechten Figurenhälfte ist eine Ausführung aufgezeigt, die ähnlich jener nach Fig. 9 funktioniert. Es sind hier an der Innenwandung des Hülsenteiles 23 umlaufende Nuten vorgesehen, in welche Sprengringe 21 eingesetzt sind, welche kraftschlüssig an der Oberfläche 27 des Hülsenteiles 24 zur Anlage kommen. In der linken Figurenhälfte der Fig. 13 ist an sich die gleiche Anordnung eines Sprengringes 21 vorgesehen, wobei jedoch das Hülsenteil 24 mehrere, im Abstand aufeinander folgende umlaufende Einbuchtungen 28 aufweist, so dass eine rasterartige Verstellung zwischen den einzelnen Hülsenteilen 23 und 24 ermöglicht wird.

Bei der Ausführung nach Fig. 14 ist ein in das äussere Hülsenteil 23 des rohrförmigen Fortsatzes 5 einsetzbares inneres Hülsenteil 24 vorgesehen, wobei dieses innere Hülsenteil 24 an seinen beider Enden mit nach innen gerichteten Anschlägen 29 und 30 versehen ist. Die Hülsenteile 23 und 24 greifen wiederum mit sägezahnartigen Rippen 25 und entsprechenden Nuten 26 formschlüssig ineinander ein, wobei die beiden Anschläge 29 und 30 zur Begrenzung des Verschiebeweges des Fortsatzes 5 gegenüber dem Befestiger 6 dienen. Bei der hier gezeigten Ausführung weist der Befestiger 6 einen Kopf 31 auf, der innerhalb des Hülsenteiles 24 geführt ist. Der axiale Verschiebeweg A dient zum Ausgleich bei entsprechender punktweiser Belastung des Befestigungselementes. Sollte sich jedoch die Isolierbahn entsprechend setzen, dann besteht die Möglichkeit, durch einfaches Auftreten auf das Befestigungselement dieses entsprechend zu verkürzen. Entweder steht dabei der Kopf 31 des Befestigers 6 am oberen Anschlag 29 an, oder aber ein entsprechender Anschlagbund 22 am Befestiger 6 kommt an der Unterseite des Hülsenteiles 24, und zwar im Bereich des Anschlages 30 zur Anlage. Das Hülsenteil 24 wird dadurch weiter in das Hülsenteil 23 hineingeschoben, so dass wiederum die gleiche Ausgangsposition gegeben ist, bei der nämlich der Kopf 31 an den unteren Anschlägen 30 anliegt und somit ein Anpressen der Unterlegscheibe auf der Oberseite der Isolierbahnen bewirkt. Es ist dann wiederum die teleskopartige Verschiebbarkeit bei entsprechender Belastung gewährleistet.

Bei der Ausführung nach den Fig. 15 und 16 ist wiederum ein Verriegelungselement 13 in Form einer ringförmigen Hülse vorgesehen, welche mit einer Innenverzahnung und zum leichteren Einrasten auf die nächstfolgenden Rippen 14 mit einem Längsschlitz 32 ausgeführt ist. Bei dieser Ausgestaltung weist der rohrförmige Fortsatz 5 einen gegen den Innenraum 11 gerichteten, umlaufenden Anschlagbund 33 auf, welcher den Verschiebeweg A des Verriegelungselementes 13 auf dem Befestiger 6 begrenzt. Auch hier kann also eine einfache Nachverstellung des Verriegelungselementes 13 erfolgen, sobald nämlich dieses Verriegelungselement 13 am dem Anschlagbund 33 zur Anlage kommt. Durch einfaches Niedertreten des Befestigungselementes wird erreicht, dass das Verriegelungselement 13 weiter auf das freie Ende 12 des Befestigers aufgeschoben wird.

Die Ausführungen nach den Fig. 17 und 18 sind an sich gleiche Konstruktionen wie in den Fig. 11 und 12 dargestellt, wobei jedoch hier im Innenraum 11 des Fortsatzes 5 jeweils ein umlaufender Anschlagbund 33 vorgesehen ist. Es ist dadurch wiederum die axiale Verschiebbarkeit zwischen Befestiger 6 und rohrförmigem Fortsatz 5 begrenzt, wobei durch Anstossen des am Befestiger 6 vorgesehenen Kopfes 31 bewirkt werden kann, dass sich die beiden Hülsenteile 23 und 24 des rohrförmigen Fortsatzes 5 bei entsprechender Krafteinwirkung auf das Befestigungselement weiter in axialer Richtung ineinanderschieben. Der Verschiebeweg A ist natürlich je nach Bedarf verschieden gross zu wählen, da je nach zu befestigenden Isolierbahnen und je nach voraussichtlicher Belastung auf diese Isolierbahnen die teleskopartige Verstellbarkeit entsprechend bemessen sein sollte. Anstelle des im Fortsatz 5 vorgesehenen Anschlagbundes 33 kann auch am Befestiger 6 ein Anschlagbund 22 vorgesehen werden, der ebenfalls den Verschiebeweg A in axialer Richtung begrenzt. Sobald dann die Unterseite 34 des rohrförmigen Fortsatzes 5 an diesem Anschlagbund 22 zur Anlage kommt, kann durch entsprechende Belastung des Befestigungselementes von oben her ein weiteres Ineinanderschieben der beiden Hülsenteile 23 und 24 des rohrförmigen Fortsatzes 5 bewirkt werden.

Anstelle der umlaufenden Anschlagbunde 33 bzw. 22 wäre es auch denkbar, eine oder mehrere Anschlagnasen oder -laschen vorzusehen.

In Fig. 19 ist aufgezeigt, dass der Befestiger 6 in einer sonst gleichen Konstruktion, wie in Fig. 3 dargestellt, auch mit einem Kopf 31 nach Art eines Schraubenkopfes ausgebildet sein kann, so dass der Befestiger 6 mit einem Einschraubgewinde auszuführen ist und in einen festen Unterbau aus Metall oder Holz eingedreht werden kann.

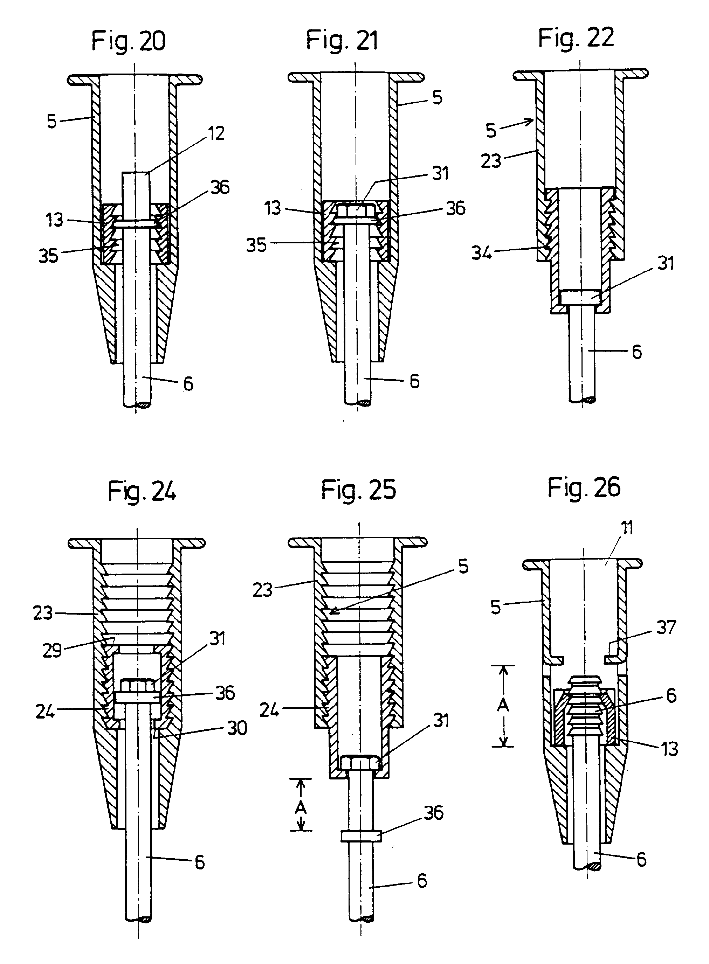

Die Ausgestaltung nach Fig. 20 zeigt ein Verriegelungselement 13 mit einer Innenrippung 35, in welche ein Bund 36 mit Abstand vom freien Ende 12 des Befestigers 6 eingreift. Die sägezahnartige Rippung 35 in diesem Verriegelungselement 13 ist entgegen der sägezahnartigen Rippung bei der Darstellung des Befestigers 6 nach Fig. 3 gerichtet, um dadurch eine rasterartige Verstellung des Verriegelungselementes 13 auf einen Befestiger 6 in der Art nach Fig. 20 zu ermöglichen. Es wäre in diesem Zusammenhang auch denkbar, einen solchen Bund 36 mit Abstand unterhalb eines Schraubenkopfes anzuordnen, was insbesondere dann in Frage kommen wird, wenn der Befestiger 6 mit einem Gewinde zum Eindrehen in den festen Unterbau versehen ist.

Eine weitere Möglichkeit im Zusammenhang mit der Fig. 20 ist der Fig. 21 zu entnehmen. Hier weist der Kopf 31 der Schraube an seiner Unterseite einen entsprechenden, über den Kopf 31 radial vorstehenden Bund 36 auf, der in die Innenverzahnung 35 des Verriegelungselementes 13 eingreift.

Fig. 22 zeigt eine Ausführungsform ähnlich der Ausbildung nach den Fig. 12 und 18, wobei jedoch das Hülsenteil 24 gegenüber dem Hülsenteil 23 wesentlich kürzer ausgebildet ist.

Fig. 23 zeigt eine Ausbildung in Anlehnung an die Konstruktionen nach den Fig. 15, 17 und 18, wobei auch hier ein umlaufender Anschlagbund 33 vorgesehen wird. Bei dieser Anordnung ist ein Befestiger 6 sowie ein Verriegelungselement 13 entsprechend der in Fig. 3 bis 5 dargestellten Form eingesetzt. Auch bei dieser Ausführungsform wird also das Ausmass der koaxialen Verschiebemöglichkeit begrenzt.

Bei der Ausgestaltung nach Fig. 24 wird eine ähnliche Wirkung erreicht, wie dies der Fig. 14 entnommen werden kann. Es ist hier ebenfalls ein inneres Hülsenteil 24 über sägezahnartige Rippen mit dem äusseren Hülsenteil 23 verschiebbar und festlegbar verbunden, wobei zwischen die beiden Anschläge 29 und 30 an den Enden dieses Hülsenteiles 24 der Kopf 31 des Befestigers 6 eingesetzt ist und die Begrenzung des Verschiebeweges mit dem an den Kopf 31 anschliessenden Bund 36 bewirkt wird.

Fig. 25 zeigt wiederum eine Ausführung auf, wie sie in den Fig. 12 und 18 ähnlich dargestellt ist, wobei jedoch bei dieser Ausführungsform der Befestiger 6 mit einem Kopf 31 und einem mit Abstand unterhalb dieses Kopfes 31 angeordneten Anschlagbund 36 versehen ist. Der Verschiebeweg A zwischen dem Befestiger 6 und dem rohrförmigen Fortsatz 5 wird hier durch den Abstand des Kopfes 31 und des Anschlagbundes 36 begrenzt. Sobald das innere Hülsenteil 24 beim Niedertreten des Befestigungselementes auf dem Anschlagbund 36 zur Anlage kommt, kann ein Nachrasten zwischen den beiden Hülsenteilen 23 und 24 bewirkt werden und somit eine Verkürzung des rohrförmigen Fortsatzes 5.

Fig. 26 zeigt eine weitere Möglichkeit auf, wie der Verschiebeweg A in axialer Richtung begrenzt werden kann. Es sind hier in der Wandung des rohrförmigen Fortsatzes 5 laschenartige Teile 37 in den Innenraum 11 des Fortsatzes 5 hineingebogen, die den Verschiebeweg des auf dem Befestiger 6 aufgesetzten Verriegelungselementes 13 nach oben hin begrenzen. Bei entsprechender Belastung des Befestigungselementes bewirken also diese nach innen gebogenen Laschen 37 ein weiteres Nachdrücken des Verriegelungselementes 13 in Achsrichtung des Befestigers 6.

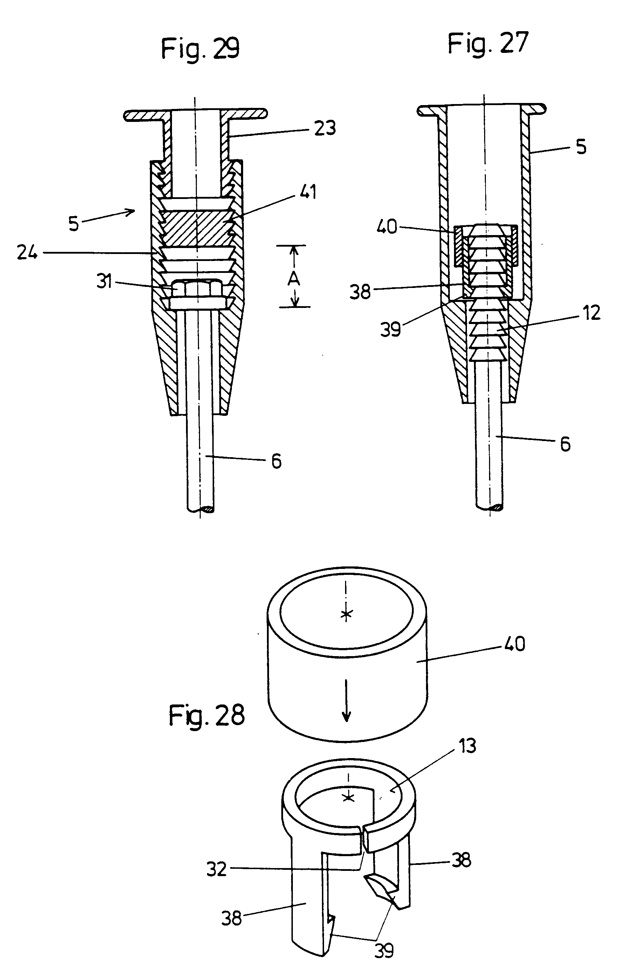

Die Fig. 27 und 28 zeigen ein Ausführungsbeispiel, bei welchem das Verriegelungselement 13 als rohrförmige Hülse mit zwei in axialer Richtung abstehenden Laschen 38 ausgebildet ist, an deren freien Ende zur Durchgangsöffnung hin abragende Rastnasen 39 ausgebildet sind. Die Laschen 38 sind durch diese besondere Ausbildung federnd nachgiebig nach aussen drückbar, so dass die Rastnasen 39 in der entsprechenden Stellung am freien Endbereich 12 des Befestigers 6 einrasten können. Bei entsprechendem Bedarf ist es auch möglich, dieses Verriegelungselement durch einen Längsschlitz 32 zu trennen, so dass auch in Umfangsrichtung noch eine Aufweitmöglichkeit gegeben ist. Um eine sichere Halterung dieses Verriegelungselementes 13 zu gewährleisten, wird eine Hülse 40 vorgesehen, welche in axialer Richtung auf das Verriegelungselement 13 aufgeschoben werden kann und dieses somit koaxial umgreift. Die Laschen 38 mit den Rastnasen 39 können somit nicht mehr aus ihrer Verriegelungsstellung herausschwenken. Im Rahmen der Erfindung wäre es auch denkbar, nur eine Lasche 38 mit einer Rastnase 39 oder auch mehr als zwei solcher Laschen 38 mit Rastnasen 39 vorzusehen.

Bei der Ausführung nach Fig. 39 wird schliesslich der Verschiebeweg A zur teleskopartigen Verstellung des Befestigungselementes durch einen in den rohrförmigen Fortsatz 5 einsetzbaren Pfropfen 41 gebildet, welcher form- und/oder kraftschlüssig, jedoch in Längsrichtung des rohrförmigen Fortsatzes 5 verstellbar an der Innenwandung des rohrförmigen Fortsatzes 5 gehalten ist. Wenn dann der rohrförmige Fortsatz 5 noch zusätzlich aus zwei ineinanderschiebbaren Hülsenteilen 23 und 24 besteht, ist eine einfache Nachstellmöglichkeit zur Verringerung der Gesamtlänge des Befestigungselementes gegeben.

Der rohrförmige Fortsatz 5 bzw. die Hülsenteile desselben und die Verriegelungselemente 13 werden zweckmässig aus Kunststoff gefertigt. Es wäre aber auch denkbar, entsprechende Metallteile einzusetzen, wobei die Teile je nach notwendiger elastischer Aufweitmöglichkeit auch mit Längsschlitzen versehen sein können. Die aufgezeigten Massnahmen sind nicht nur dann einsetzbar, wenn die Unterlegscheibe 4 und der rohrförmige Fortsatz 5 aus zwei getrennten Teilen gebildet sind, sondern auch dann, wenn Unterlegscheibe 4 und Fortsatz 5 einstückig gefertigt werden.

Gerade bei der Ausbildung des Befestigers mit einem Einschraubgewinde ist es zweckmässig, wenn das Verriegelungselement 13 verdrehsicher im rohrförmigen Fortsatz 5 gehalten ist und wenn ausserdem der rohrförmige Fortsatz 5 selbst wiederum verdrehsicher mit der Unterlegscheibe 4 verbunden wird. Es kann dadurch trotz der nicht beeinträchtigten axialen Verschiebemöglichkeit eine Losdrehsicherheit für den Befestiger geschaffen werden. Dies kann beispielsweise dadurch erreicht werden, dass eine mehreckige Aussenbegrenzung des Verriegelungselementes 13 annähernd dem Querschnitt des Innenraumes des rohrförmigen Fortsatzes 5 entspricht.

Je nach Einsatzmöglichkeiten und Einsatzort ist es unter Umständen zweckmässig, wenn das Verriegelungselement 13 mit Angriffselementen für ein Spezialwerkzeug versehen ist.

In der vorstehenden Beschreibung sind eine Reihe von Ausführungsbeispielen aufgezeigt worden, wobei jedoch die Erfindung nich auf die dargestellten Beispiele beschränkt ist (siehe Z.B. die Ansprüche). Durch die erfindungsgemässen Massnahmen wird ein wesentlicher Fortschritt bei der Befestigung von Isolierbahnen und/oder -platten auf einem festen Unterbau erzielt.

## Patentansprüche

1. Befestigungselement (3) zur Fixierung von Isolierbahnen (1) und/oder -platten auf einem festen Unterbau (2), mit einer großflächigen Unterlegscheibe (4) und einem rohrförmigen Fortsatz (5) zum Durchtritt, zur Führung eines und zur Halterung an einem in den festen Unterbau eingreifenden Befestigers (6), wobei die durch den rohrförmigen Fortsatz (5) und den diesen überragenden Abschnitt des Befestigers (6) gebildete Länge (L) durch eine kraft- und/oder formschlüssige, verstellbare Verbindung veränderbar ist, **dadurch gekennzeichnet**, daß die kraft- und/oder formschlüssig lösbare Verbindung zwischen dem Befestiger (6) und einem auf sein in den Fortsatz (5) hineinragendes Ende (12) aufgesetzten Verriegelungselement (13) oder zwischen dem Befestiger (6) und dem rohrförmigen Fortsatz (5) oder zwischen Abschnitten eines mehrteiligen Fortsatzes (5) einstellbar ausgebildet ist, daß der in den rohrförmigen Fortsatz (5) hineinragende Endbereich (12) des Befestigers (6) und/oder das Verriegelungselement (13) mit Rippen ( 14), Rillen, Riffelungen, Erhebungen, Vertiefungen, federnd nachgiebigen Laschen (38) bzw. Nasen oder dergleichen zum gegenseitigen kraft- und/oder formschlüssigen Angriff versehen sind, und daß der Befestiger (6) und der rohrförmige Fortsatz (5) teleskopartig ineinanderschiebbar sind.

2. Befestigungselement nach Anspruch 1, dadurch gekennzeichnet, daß das Verriegelungselement (13) als rohrförmige Hülse (15) mit einer oder mehreren zur Durchgangsöffnung hin abstehenden oder abgebogenen, federnd nachgiebigen Rastnasen (39) oder -laschen (16) ausgeführt ist.

3. Befestigungselement nach Anspruch 1, dadurch gekennzeichnet, daß das Verriegelungselement (13) eine gehärtete Innenverzahnung (19) bzw. -riffelung aufweist und mit entsprechender Passung auf den glatten Endbereich (12) des Befestigers (6) aufsetzbar ist.

4. Befestigungselement nach Anspruch 1, dadurch gekennzeichnet, daß das Verriegelungselement (13) an der Wandung der Durchgangsbohrung zwei oder mehrere umlaufende Nuten aufweist, in welche Sprengringe (21) eingesetzt sind.

5. Befestigungselement nach Anspruch 1, dadurch gekennzeichnet, daß das Verriegelungselement (13) eine Innenrippung oder -verzahnung (35) aufweist, in welche ein Bund (36) unterhalb des Schraubenkopfes (31) des Befestigers (6) oder ein mit Abstand vom Ende des Befestigers (6) angeordneter, ringförmiger Anschlagbund (36) eingreift.

6. Befestigungselement nach Anspruch 1, dadurch gekennzeichnet, daß das Verriegelungselement (13) eine Durchgangsöffnung (17) mit einer auf das freie Ende (12) des Befestigers (6) abgestimmten Innenverzahnung bzw. einem Innengewinde ausgeführt ist, wobei eine weitere Durchgangsöffnung (18) mit glatter Oberfläche und einem Durchmesser gleich oder größer als der Außendurchmesser des Befestigers (6) die erste Durchgangsöffnung (17) spitzwinklig kreuzt.

7. Befestigungselement nach den Ansprüchen 1 bis 6, dadurch gekennzeichnet, daß das Verriegelungselement (13) einen über dessen ganze Länge durchgehenden Längsschlitz (32) aufweist.

8. Befestigungselement nach den Ansprüchen 1 bis 7, gekennzeichnet durch eine auf das Verriegelungselement (13) aufsetz- oder aufschiebbare Hülse (40).

9. Befestigungselement nach Anspruch 1, dadurch gekennzeichnet, daß der Verschiebeweg (A) zwischen dem Befestiger (6) und dem rohrförmigen Fortsatz (5) durch Anschläge am Befestiger (6), am Verriegelungselement (13) und/oder am rohrförmigen Fortsatz (5) begrenzt ist.

10. Befestigungselement nach den Ansprüchen 1 und 9, dadurch gekennzeichnet, daß der Befestiger (6) mit Abstand vom in den rohrförmigen Fortsatz (5) ragenden Ende einen Anschlagbund (22) aufweist, wobei der Kopf (31) des Befestigers (6) bzw. das auf das freie Ende (12) des Befestigers (6) aufgesetzte Verriegelungselement (13) einerseits und der Anschlagbund (22) andererseits den Verschiebeweg (A) des Fortsatzes (5) gegenüber dem Befestiger (6) begrenzen.

11. Befestigungselement nach den Ansprüchen 1 und 9, dadurch gekennzeichnet, daß der rohrförmige Fortsatz (5) mit Abstand von der am unteren Ende ausgebildeten Durchgangsöffnung für den Befestiger an dessen Innenwandung einen umlaufenden Anschlagbund (33) bzw. eine oder mehrere Anschlagnasen aufweist.

12. Befestigungselement nach den Ansprüchen 1 und 9, dadurch gekennzeichnet, daß der Verschiebeweg (A) des Befestigers (6) im rohrförmigen Fortsatz (5) auf einer Seite von einem in den rohrförmigen Fortsatz (5) einsetzbaren Pfropfen (41), einer Hülse oder dergleichen gebildet ist, welche form- und/oder kraftschlüssig, jedoch in dessen Längsrichtung verstellbar an der Innenwandung des rohrförmigen Fortsatzes (5) gehalten ist.

13. Befestigungselement nach Anspruch 1 und einem der vorhergehenden Ansprüche, dadurch gekennzeichnet, daß der rohrförmige Fortsatz (5) aus zwei einander koaxial übergreifenden Hülsenteilen (23, 24) gebildet ist, welche form- und/oder kraftschlüssig, jedoch in Axialrichtung verstellbar miteinander verbunden sind.

14. Befestigungselement nah Anspruch 13, dadurch gekennzeichnet, daß ein in das äußere Hülsenteil (23) einsetzbares inneres Hülsenteil (24) an beiden Enden mit nach innen gerichteten Anschlägen (29, 30) zur Begrenzung des Verschiebeweges (A) für einen Kopf (31) oder einen Anschlagbund (36) des Befestigers (6) versehen ist.

15. Befestigungselement nach Anspruch 1, dadurch gekennzeichnet, daß der Befestiger (6) anschließend an den in den festen Unterbau (2) einsetzbaren Abschnitt (9) einen Anschlagbund (11) aufweist.

16. Befestigungselement nach den Ansprüchen 1 bis 7, dadurch gekennzeichnet, daß das Verriegelungselement (13) verdrehsicher im rohrförmigen Fortsatz (5) gehalten und der rohrförmige Fortsatz (5) verdrehsicher mit der Unterlegscheibe (4) verbunden ist.

17. Befestigungselement nach Anspruch 16, dadurch gekennzeichnet, daß eine mehreckige Außenbegrenzung des Verriegelungselementes (13) annähernd dem Querschnitt des Innenraumes des rohrförmigen Fortsatzes (5) entspricht.

18. Befestigungselement nach den Ansprüchen 1 bis 7, dadurch gekennzeichnet, daß das Verriegelungselement (13) mit Angriffselementen für ein Werkzeug versehen ist.

## Claims

1. A fastening element (3) for fixing insulation sheets (1) and/or plates on a fixed substructure (2), comprising a large-area washer (4) and a tubular extension (5) for the passage through and guiding of a fastener (6) engaging in the fixed substructure and for the mounting on the said fastener, the length (L) constituted by the tubular extension (5) and the section of the fastener (6) projecting beyond it being variable by means of an adjustable frictional and/or positive connection, characterised in that the frictionally and/or positively releasable connection between the fastener (6) and a locking element (13) mounted on the end (12) thereof projecting into the extension (5) or between the fastener (6) and the tubular extension (5) or between sections of a multiple-part extension (5) is designed to be adjustable, in that the end region (12) of the fastener (6) projecting into the tubular extension (5) and/or the locking element (13) is/are provided with ribs (14), grooves, corrugations, prominences, indentations, elastically resilient lugs (38) or projections or the like for reciprocal frictional and/or positive engagement, and in that the fastener (6) and the tubular extension (5) may be inserted telescopically one inside the other.

2. A fastening element according to claim 1, characterised in that the locking element (13) is designed as a tubular sleeve (15) with one or more elastically resilient engaging projections (39) or -lugs (16) projecting or deflected towards the passage opening.

3. A fastening element according to claim 1, characterised in that the locking element (13) has hardened interior toothing (19) or -corrugation and may be mounted with appropriate fit on the smooth end region (12) of the fastener (6).

4. A fastening element according to claim 1, characterised in that the locking element (13) has on the wall of the through-hole two or more circular grooves into which spring rings (21) are inserted.

5. A fastening element according to claim 1, characterised in that the locking element (13) has interior ribbing or -toothing (35) into which a flange (36) beneath the screw head (31) of the fastener (6) or an annular stop flange (36) arranged at a distance from the end of the fastener (6) engages.

6. A fastening element according to claim 1, characterised in that the locking element (13) [has] a passage opening (17) with internal toothing or an internal thread coordinated with the free end (12) of the fastener (6), a further passage opening (18) with a smooth surface and a diameter equal to or greater than the external diameter of the fastener (6) crossing the first passage opening (17) at an acute angle.

7. A fastening element according to claims 1 to 6, characterised in that the locking element (13) has an elongated slot (32) passing through the whole length thereof.

8. A fastening element according to claims 1 to 7, characterised by a sleeve (40) which may be placed on or pushed on to the locking element (13).

9. A fastening element according to claim 1, characterised in that the displacement distance (A) between the fastener (6) and the tubular extension (5) is limited by stops on the fastener (6), on the locking element (13) and/or on the tubular extension (5).

10. A fastening element according to claims 1 and 9, characterised in that the fastener (6) has a stop flange (22) at a distance from the end projecting into the tubular extension (5), the head (31) of the fastener (6) or the locking element (13), on the one hand, and the stop flange (22), on the other hand, mounted on the free end (12) of the fastener (6) limiting the displacement distance (A) of the extension (5) relative to the fastener (6).

11. A fastening element according to claims 1 and 9, characterised in that the tubular extension (5) has on its interior wall a circular stop flange (33) or one or more stop projections at a distance from the passage opening, formed at the lower end, for the fastener.

12. A fastening element according to claims 1 and 9, characterised in that the displacement distance (A) of the fastener (6) in the tubular extension (5) is formed on one side by a stopper (41), sleeve or the like, insertable into the tubular extension (5), which is held on the interior wall of the tubular extension (5) in a positive and/or frictionally locking manner but so as to be adjustable in the longitudinal direction thereof.

13. A fastening element according to claim 1 and one of the preceding claims, characterised in that the tubular extension (5) is formed from two sleeve parts (23, 24) which overlap one another coaxially and which are joined together in a positive and/or frictionally locking manner but so as to be adjustable in the axial direction.

14. A fastening element according to claim 13, characterised in that an inner sleeve part (24) insertable into the outer sleeve part (23) is provided at both ends with inwardly directed stops (29, 30) to limit the displacement distance (A) for a head (31) or a stop flange (36) of the fastener (6).

15. A fastening element according to claim 1, characterised in that the fastener (6) has a stop flange (11) [sic] adjoining the section (9) which is insertable in the fixed substructure (2).

16. A fastening element according to claims 1 to 7, characterised in that the locking element (13) is held in the tubular extension (5) so as to be secured against rotation and the tubular extension (5) is connected to the washer (4) so as to be secured against rotation.

17. A fastening element according to claim 16, characterised in that a polygonal exterior limitation of the locking element (13) approximately corresponds to the cross-section of the interior of the tubular extension (5).

18. A fastening element according to claims 1 to 7, characterised in that the locking element (13) is provided with attachment elements for a tool.

## Revendications

1. Elément de fixation (3) servant à fixer des bandes ou des plaques isolantes (1) sur une infrastructure rigide (2), comportant une rondelle (4) de grande dimension et un prolongement tubulaire (5) constituant le passage, le guide et le maintien d'une attache (6) en prise avec l'infrastructure rigide, la longueur L de l'ensemble constitué par le prolongement tubulaire (5) et la partie de l'attache (6) dépassant ce prolongement pouvant être modifiée par l'intermédiaire d'une liaison réglable, par interpénétration par la force ou la forme, élément caractérisé en ce que le réglage de cette liaison mobile peut être effectué entre l'attache (6) et un élément de verrouillage (13), monté sur l'extrémité (12) de l'attache pénétrant dans le prolongement (5) ou entre l'attache (6) et le prolongement tubulaire (5) ou entre les éléments d'un prolongement en plusieurs parties (5), l'extrémité (12) de l'attache (6) située dans le prolongement tubulaire (5) et/ou l'élément de verrouillage (13) portant des nervures, rayures, cannelures, parties en relief ou en creux, languettes (38) ou becs élastiques flexibles ou organes analogues assurant, par réciprocité, une prise par interpénétration par la force ou par la forme, l'attache (6) et le prolongement tubulaire (5) étant mobiles télescopiquement l'un par rapport à l'autre.

2. Elément de fixation selon la revendication 1, caractérisé en ce que l'élément de verrouillage (13) est constitué d'une douille tubulaire (15) équipée de becs (39) ou de languettes d'accrochage (16) élastiques engagées dedans ou rabattues vers l'alésage central de la douille.

3. Elément de fixation selon la revendication 1, caractérisé en ce que l'élément de verrouillage (13) comporte une partie interne durcie, dentée ou cannelée (19) ajustée coulissante sur l'extrémité lisse (12) de l'attache (6).

4. Elément de fixation selon la revendication 1, caractérisé en ce que l'élément de fixation présente, dans la paroi de son alésage central, une ou plusieurs rainures servant de logements à des anneaux élastiques (21).

5. Elément de fixation selon la revendication 1, caractérisé en ce que l'élément de fixation (13) comporte un rainurage ou une denture interne (35) en prise soit avec une rondelle débordante (36) montée sous la tête (31) de la vis logée à l'extrémité de l'attache (6), soit avec un collet annulaire (36) porté par l'attache (6) à une certaine distance de son extrémité.

6. Elément de fixation selon la revendication 1, caractérisé en ce que l'élément de verrouillage (13) comporte d'une part un alésage central (17) muni, d'une denture ou d'un filetage interne ajusté à l'extrémité libre (12) de l'attache (6), d'autre part un second alésage (18), croisant obliquement le premier, à paroi lisse et de diamètre égal ou un peu supérieur au diamètre extérieur de l'attache (6).

7. Elément de fixation selon les revendications 1 à 6, caractérisé en ce que l'élément de verrouillage (13) présente, sur toute sa longueur, une rainure longitudinale (32).

8. Elément de fixation selon les revendications 1 à 7, caractérisé en ce que sur l'élément de verrouillage (13) peut être montée une douille (40), par coulissement ou emmanchement.

9. Elément de fixation selon la revendication 1, caractérisé en ce que la course de réglage (A) entre l'attache (6) et le prolongement tubulaire (5) est limitée par des butées montées sur l'attache (6), sur l'élément de verrouillage (13) et/ou sur le prolongement (5).

10. Elément de fixation selon les revendications 1 à 9, caractérisé en ce que l'attache (6) présente, à une certaine distance de son extrémité engagée dans le prolongement tubulaire (5), un collet de butée (22) de sorte que la tête (31) de l'attache (6) ou l'élément de verrouillage (13) monté sur l'extrémité libre (12) de l'attache (6) d'une part, le collet de butée (22) d'autre part, limitent la course de réglage (A) du prolongement (5) par rapport à l'attache (6).

11. Elément de fixation selon les revendications 1 et 9, caractérisé en ce que le prolongement tubulaire (5) présente sur la paroi interne de son alésage recevant l'attache et à une certaine distance de l'ouverture inférieure de cet alésage, un collet interne de butée (33) ou une ou plusieurs dents de butée.

12. Elément de fixation selon les revendications 1 à 9, caractérisé en ce que la course de réglage (A) de l'attache (6) dans le prolongement tubulaire (5) est délimitée d'un côté par un tampon (41), ou douille ou organe analogue emmanché, maintenu à force ou par combinaison de formes le long de la paroi interne du prolongement (5) tout en pouvant être déplacé longitudinalement.

13. Elément de fixation selon la revendication 1 et une des revendications précédentes, caractérisé en ce que le prolongement tubulaire (5) est constitué de deux parties coaxiales en prise, ayant la forme de douilles (23, 24) dont la liaison est réalisé par force ou par combinaison de formes mais qui peuvent être réglées l'une par rapport à l'autre en direction axiale.

14. Elément de fixation selon la revendication 13, caractérisé en ce que la partie interne en forme de douille (24) montée dans la partie externe en forme de douille (23), porte à ses deux extrémités des butées (29, 30) dirigées vers l'intérieur et limitant la course de réglage (A) de la tête (31) ou du collet de butée (36) de l'attache (6).

15. Elément de fixation selon la revendication 1, caractérisé en ce que l'attache (6) porte, au bout de sa partie (9) destinée à être logée dans l'infrastructure solide (2), un collet de butée (42).

16. Elément de fixation selon la revendication 1 à 7, caractérisé en ce que l'élément de verrouillage (13) ne peut pas tourner dans le prolongement tubulaire (5) qui lui-même est bloqué en rotation par liaison avec la rondelle (4).

17. Elément de fixation selon la revendication 16, caractérisé en ce que la section extérieure polygonale de l'élément de verrouillage (13) correspond sensiblement à la section interne du prolongement tubulaire (5).

18. Elément de fixation selon les revendications 1 à 7, caractérisé en ce que l'élément de verrouillage (13) est équipé d'organes permettant la prise d'un outil.
